# EUROPEAN PATENT SPECIFICATION

(11) **EP 3 953 138 B1**
(45) Date of publication and mention of the grant of the patent: **16.07.2025**
(21) Application number: 20787056.9
(22) Date of filing: 10.04.2020
(51) Int. Cl.: B29C 45/14, B60J 1/00, B29L 31/30

(54) **VEHICLE DECORATION PART, VEHICLE WINDOW GLASS ASSEMBLY AND MANUFACTURING PROCESS THEREOF**
FAHRZEUGDEKORATIONSTEIL, FAHRZEUGFENSTERSCHEIBENANORDNUNG UND HERSTELLUNGSVERFAHREN DAFÜR
PIÈCE DÉCORATIVE DE VÉHICULE, ENSEMBLE VITRE DE VÉHICULE ET PROCÉDÉ DE FABRICATION CORRESPONDANT

(30) Priority: 12.04.2019 CN 201910293398
(43) Date of publication of application: 16.02.2022
(73) Proprietor: Saint-Gobain Glass France, 92400 Courbevoie (FR)
(72) Inventor: GAO, Xinqiao, Shanghai 200245 (CN); XU, Xiaobing, Shanghai 200245 (CN); YU, Buyin, Shanghai 200245 (CN)
(74) Representative: Saint-Gobain Recherche
(86) International application number: PCT/CN2020/084123
(87) International publication number: WO 2020/207459

(56) References cited:
- EP-A1- 1 897 713
- WO-A1-2010/106868
- WO-A1-2010/106868
- CN-A- 101 022 952
- CN-A- 101 208 212
- CN-A- 101 208 212
- US-A1- 2006 019 099

## Description

### FIELD OF THE INVENTION

The present disclosure generally relates to the field of production of vehicle components. More specifically, the present disclosure relates to a vehicle decoration part, a vehicle window glass assembly with the vehicle decoration part and a manufacturing process thereof.

### BACKGROUND OF THE INVENTION

With the rapid development of the automobile industry, the appearance of vehicles is constantly updated to meet the preferences of different consumers from all walks of life. In order to improve the appearance quality of the whole vehicle, more and more manufacturers adopt to attach decoration trims to bare sheet metal of doors and window frames for decoration. Traditional decoration trims are usually bright trims made of plastic or metal, which are used to cover the sheet metal of vehicle body pillars (A-pillar, B-pillar and C-pillar) and/or window frames to improve the glossiness of the outer surface, so as to increase the overall luxury and sports sense of the vehicle.

By example EP-1.897.713 describes a method for producing a window glass with a decoration member having a resin frame integrally secured to the perimeter edge of the window glass, and a decoration member secured to the frame. The decoration member is provided in the cavity of a die for injection molding the frame, and an adhesive layer is formed on that surface of the decoration member that is in contact with the frame.

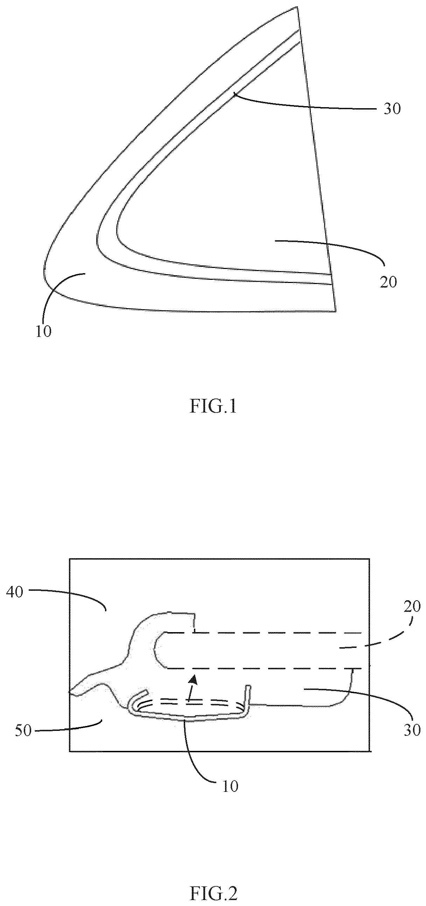

Fig. 1 shows that a decoration trim is applied to a rear quarter window of a vehicle, wherein the rear quarter window assembly of the vehicle includes a glass body 20 and an encapsulation 30 covering the periphery of the glass body 20, and the vehicle decoration part 10 is attached to the encapsulation 30. For automobile manufacturers, the vehicle decoration part 10 is usually made of a metal material such as stainless steel or aluminum alloy, and is directly adhered to the vehicle body using double-sided adhesive tape, or forms an integral structure with the glass body and the encapsulation via "over-molded" process. Specifically, as shown in Fig. 2, the decoration part 10 and the glass body 20 are put into an injection mold including an upper mold 40 and a lower mold 50, and a molten encapsulation material, such as PVC (polyvinyl chloride) or TPE (thermoplastic elastomer) and so on, for forming the encapsulation 30 is injected. After the encapsulation material is cooled and cured, the glass body 20 and the decoration part 10 will be combined and fixed together by the binding property of the encapsulation material.

However, when using the existing injection molding process to form the encapsulation, due to the characteristics of the plastic material itself, the melted encapsulation material will shrink due to cooling in the mold cavity, which makes the encapsulation size not well match with other parts. In particular, when the molded thickness of the encapsulation material is more than 5mm, shrinkage phenomenon will be obviously observed on the surface of the injection molded product. In addition, a primer material is usually applied between the decoration part and the encapsulation material to obtain good adhesion and fixation therebetween. If the encapsulation material is thicker in the decoration part area, the encapsulation material will generate a relatively large cooling shrinkage, thus causing the decoration part deforming in local areas to follow the shape of the encapsulation. As shown by dashed lines in Fig. 2, the decoration part 10 will deform in the arrow direction. Obviously, such deformation will cause optical distortion, such as concavity, on the outer surface of the decoration part, thus affecting the appearance quality, and the surface geometry size will not meet the production and assembly requirements.

In order to prevent shrinkage, in some cases, increased injection pressure is used during injection molding process. However, it would cause more injection molding materials to leak due to high pressure, resulting in additional trimming work, and may also cause glass breakage, resulting in a drop in yield. In some cases, it is also considered that primer material is not applied to the local area where the encapsulation material is thicker to reduce the adhesion between the decoration part and the injection molding material. However, it would also add additional procedures due to the difficulty in operation and the need for additional specific tools, resulting in a longer cycle time and more production space.

### SUMMARY OF THE INVENTION

The purpose of the present disclosure is to solve the problems existing in the above-mentioned prior art, and to provide a vehicle decoration part which can effectively avoid deformation in the injection molding process of encapsulation, thereby obtaining the required aesthetic appearance at low cost, being suitable for being well adapted to the manufacturing process of window components, and improving the product qualification rate.

To this end, according to one aspect of the present disclosure, a vehicle window glass assembly is provided. The window glass assembly comprises a glass body, an encapsulation covering periphery of the glass body, and a vehicle decoration part as described hereafter.

The vehicle decoration part is used to be attached to an encapsulation by integral injection molding, the vehicle decoration part comprises a decoration body and a lining film attached to an inner surface of the decoration body, the lining film covers a portion of the inner surface such that the covered inner surface does not contact with injection molding material during injection molding process of the decoration part. The thickness of the encapsulation corresponding to a position covered by the lining film on the inner surface of the decoration body is larger than the thickness of the encapsulation corresponding to a position not covered by the lining film.

According to the above technical concept, the present disclosure may further include any one or more of the following alternative embodiments.

In some alternative embodiments, there is no adhesion between the lining film and the injection molding material.

In some alternative embodiments, the lining film is made of polyvinylidene fluoride or polytetrafluoroethylene.

In some alternative embodiments, the lining film is a single film or a plurality of films spaced along the length direction of the decoration body.

In some alternative embodiments, the lining film is attached to the inner surface of the decoration body by lamination, coating, or adhesion.

In some alternative embodiments, the lining film is attached to the inner surface after the decoration body is subjected to a priming process.

In some alternative embodiments, the thickness of the lining film is 0.1 to4mm.

According to another aspect of the present disclosure, a process for manufacturing the above-mentioned vehicle window glass assembly is provided. The process comprises the following steps of:
a. providing a vehicle decoration part as described above;
b. placing the vehicle decoration part into a cavity of a mold and enabling outer surface of the decoration body to be adhered to inner wall of the cavity;
c. placing the cut and shaped glass body into the cavity and fixing the glass body in place; and
d. injecting thermoplastic polymer into the cavity to form the encapsulation, and enabling the vehicle decoration part to be integrally molded with the encapsulation.

In some alternative embodiments, prior to the step a, a step of performing a priming process on the inner surface of the decoration body and then attaching the lining film to a portion of the inner surface is further comprised.

According to the vehicle decoration part provided by the present disclosure, the lining film is provided on the inner surface of the decoration body, so that the covered inner surface is not adhered to the injection molding material, and the thickness of the encapsulation corresponding to the position covered by the lining film on the inner surface of the decoration body is larger than the thickness of the encapsulation corresponding to the position not covered by the lining film, so that deformation of the decoration part caused by larger shrinkage of the encapsulation material in a thicker area can be avoided when the injection molding process of the vehicle window encapsulation is implemented. Therefore, the vehicle window glass assembly with the vehicle decoration part possesses good appearance and ensures the geometric size assembled with vehicle components. It has high production efficiency and is easy to control, and can be widely applicable to various occasions.

### BRIEF DESCRIPTION OF THE DRAWINGS

Other features and advantages of the present disclosure will be better understood by the following detailed description of alternative embodiments in conjunction with the accompanying drawings, in which similar reference numerals designate the same or similar components, wherein:
Fig. 1 is a schematic view of a vehicle decoration part applied to a vehicle window glass;
Fig. 2 is a schematic view showing existing injection molding process of a vehicle window glass assembly;
Fig. 3 is a schematic view showing injection molding process of a vehicle window glass assembly according to an embodiment of the present disclosure; and
Fig. 4 is a schematic view showing a plurality of lining films implemented on the inner surface of a vehicle decoration part.

### DETAILED DESCRIPTION OF EMBODIMENTS

The implementation and use of the embodiments are discussed in detail below. However, it should be understood that the specific embodiments discussed merely exemplify specific ways of implementing and using the present disclosure, and do not limit the scope of the present disclosure. When describing the structural positions of various components, such as the directions of upper, lower, top, bottom, etc., the description is not absolute, but relative. When the various components are arranged as shown in the figures, these directional expressions are appropriate, but when the positions of the various components in the figures would be changed, these directional expressions would also be changed accordingly.

In this context, "outer" and "inner" refer to directions relative to the vehicle body, "outer" refers to direction away from the vehicle body, and "inner" refers to direction facing the vehicle body.

In this context, "glass" refers to a kind of transparent semi-solid and semi-liquid substance, it is a silicate nonmetallic material which forms a continuous network structure when melting, and gradually increases in viscosity and hardens without crystallization during cooling.

In this context, "polymer" includes thermosetting polymer and thermoplastic polymer. Thermosetting polymer is produced by curing reaction of prepolymer in the presence of curing agent. Thermoplastic polymer is polymer that can be repeatedly heated to melt, molded in a softening or flowing state, and can maintain the shape of a mold after cooling. Curing agent is generally not required in the molding process of the thermoplastic polymer.

According to the concept of the present disclosure, the deformation defect commonly existing in the prior art when the vehicle decoration trim is applied to automobile encapsulation is considered to be solved, and thus the artistic appearance of the vehicle body is increased, and the assembly size of the vehicle window glass assembly is improved.

To this end, the present disclosure provides a vehicle decoration part including a decoration body, wherein an outer surface of the decoration body constitutes a decoration surface, and an inner surface is attached to an encapsulation of a vehicle window glass assembly in an injection molding process. It should be understood that the decoration body may be made of a metal material or a polymer, such as polyvinyl fluoride or polypropylene. In some embodiments, the decoration body may be made of stainless steel or aluminum alloy to obtain lower cost efficiency and higher rigidity. It should be understood that the encapsulation can also be referred to as "sealing material", which refers to the material, usually thermoplastic polymer, injected into a mold in a molten state during the injection molding process of the vehicle window glass assembly, which plays a sealing role and can reduce wind noise and ensure good appearance. The thermoplastic polymer may be, for example, rubber, composite material or other materials that can be used for sealing, including but not limited to polyurethane (PU), thermoplastic elastomer (TPE), ethylene propylene diene monomer (EPDM), thermoplastic vulcanizate (TPV), fluororubber, silicone rubber, styrene-butadiene rubber, nitrile rubber, polyvinyl chloride (PVC), polypropylene (PP), polyurethane rubber, acrylate rubber, styrene thermoplastic elastomer (SEBS+PP), polysulfide rubber, polymethyl methacrylate (PMMA). In addition, although the rear quarter window is illustrated and described as an example, the vehicle window includes, but is not limited to, front windshield, rear windshield, front door window, rear door window, sunroof and the like.

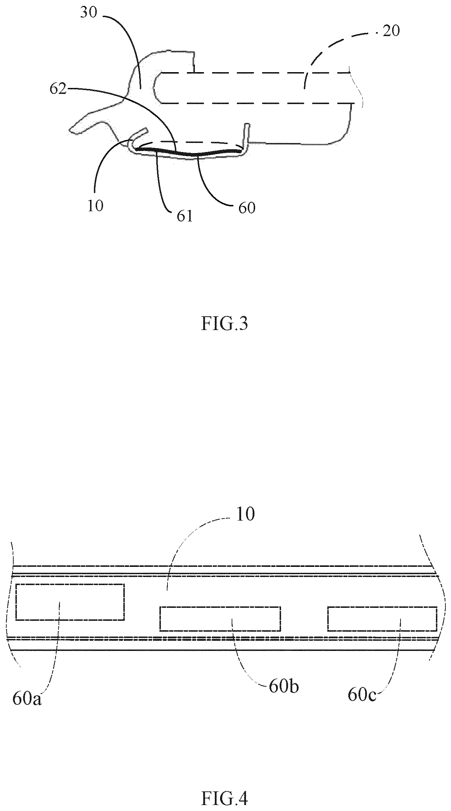

Referring to Fig. 3, the present disclosure advantageously provides a lining film 60 on the inner surface of the decoration body of the vehicle decoration part 10 to cover a portion of the inner surface so that the covered inner surface does not contact with the injection molding material in the injection molding process of the decoration part. The present disclosure provides lining film only for specific encapsulation portions where is prone to shrinkage (e.g., thicker portions of the encapsulation). Specifically, the thickness of the encapsulation corresponding to the position covered by the lining film on the inner surface of the decoration body is larger than the thickness of the encapsulation corresponding to the position not covered by the lining film.

As mentioned above, the lining film does not adhere to the injection molding material, which can be realized by selecting a material suitable for the lining film. At the same time, the lining film and the inner surface of the decoration body are firmly connected by, for example, adhesion. In this way, the lining film can always remain adhered to a specific position on the inner surface of the decoration body during the injection molding process without displacement or dislocation due to factors such as injection pressure. In addition, when the injection-molded vehicle window glass assembly cools and the shrinkage of the injection molding material occurs, as shown in Fig. 3, since the attachment surface 61 of the lining film 60 is adhesively connected to the decoration part 10 and there is no adhesion between the surface 62 of the lining film 60 and the injection molding material forming the encapsulation 30, the shrinkage of the injection molding material (as shown by dotted line in Fig. 3) causes the decoration body portion covered by the lining film to peel off from the injection molding material without causing deformation of the decoration body portion. Therefore, even if the cooling shrinkage of the injection molding material is inevitable, the initial shape of the decoration part can be effectively maintained, thereby ensuring the finished appearance of the vehicle window glass assembly.

According to the present disclosure, the lining film 60 can be made of a polymer, especially a high temperature resistant polymer, and the polymer does not have an adhesive effect with the injection molding material, so that problems such as easy melting or abrasion can be avoided in the injection molding process of the encapsulation of the vehicle window. For example, in some embodiments, the lining film 60 may be polyvinylidene fluoride (PVDF) or polytetrafluoroethylene (PTFE), but other polymers having similar properties are also possible. According to the actual requirements, the covering position of the lining film is not unique. In some embodiments, the lining film may be a single film that integrally covers a desired location along the longitudinal length of the decoration body. In some embodiments, the lining film may be a plurality of films spaced along the length direction of the decoration body. In other words, the lining film may be integrally attached at a specific position or may also be attached in sections. As shown in Fig. 4, a first lining film 60a, a second lining film 60b and a third lining film 60c are respectively applied to the positions with larger thickness of the encapsulation according to the encapsulation size design along the length direction of the decoration body. **In** addition, it should be understood that although the lining film shown in the figures is rectangular, the lining film may be configured as any shape and may have different sizes according to actual requirements.

The lining film can be attached to the decoration body by lamination, coating or adhesion. The process of lamination can adopt conventional film laminating equipment to attach the lining film to the decoration body. The process of coating includes but not limited to drop coating, dip coating, brush coating, spray coating, vapor deposition, electroplating, etc. The process of adhesion can use the adhesive, for example, the pressure sensitive adhesive can be used to achieve reliable adhesion between the lining film and the decoration body. Since the lining film is in contact with the injection molding material injected at high temperature, when the adhesive is used for connection, the adhesive needs to have heat resistance, and thus thermosetting adhesive such as epoxy-based adhesive or nylon-based adhesive is preferably used.

Considering the appearance and assembly of the vehicle window glass assembly, and in order to ensure good positioning and fixation between the decoration part 10 and the injection molding material forming the encapsulation, the inner surface of the decoration body is optionally coated with primer before injection molding. According to the present disclosure, the lining film 60 is attached to the inner surface of the decoration body after the decoration body being performed a priming process, and the lining film 60 covers a portion of the inner surface of the decoration body. **In** other words, the presence of the lining film will not affect the connection between the decoration part and the encapsulation of the vehicle window.

In some embodiments, the thickness of the lining film may be 0.1 to 4mm, optionally less than 3.2mm. In this way, the presence of the lining film does not significantly increase the thickness of the decoration body, and can be applied to most decoration bodies in the prior art.

The manufacturing process of the vehicle window glass assembly according to the present disclosure will be described as below, and the manufacturing process may include the following steps:
Step a. providing a vehicle decoration part;
Step b, placing the vehicle decoration part into a cavity of a mold and enabling outer surface of the decoration body to be adhered to inner wall of the cavity;
Step c. placing the cut and shaped glass body into the cavity and fixing the glass body in place; and
Step d. injecting thermoplastic polymer into the cavity to form the encapsulation, and enabling the vehicle decoration part and the encapsulation to be integrally molded.

Further, prior to the step a, the following steps are further included: performing a priming process on the inner surface of the decoration body, and then attaching the lining film to a portion of the inner surface. In this way, the inner surface of the decoration body can maintain sufficient connection relation with the injection molding material, so as to ensure the dimensional assembly of the decoration part and the injection-molded encapsulation, and at the same time, the deformation problem of the decoration part caused by shrinkage of the injection molding material can be inhibited by the lining film.

Compared with the existing vehicle window glass assembly, the vehicle decoration part according to the present disclosure has no deformation defect in appearance, and the assembly size of the finished product is obviously improved, thus meeting the assembly requirements with vehicle components. In addition, since the lining film is added to the vehicle decoration part after the priming process is carried out, and the lining film can effectively avoid the shrinkage deformation problem, the existing priming process does not need to be modified. Similarly, when the injection molding process is carried out, the injection pressure does not need to be increased, thus simplifying the process steps and improving the production efficiency.

It should be understood that the embodiments shown in the figures only illustrate the optional shapes, sizes and arrangements of various optional components of the vehicle decoration part and vehicle window glass assembly according to the present disclosure; however, it is only for illustration and not limitation, and other shapes, sizes and arrangements may be adopted without departing from the scope of the present disclosure. In the various embodiments mentioned above, the glass body can be selected as ordinary glass, tempered glass, laminated glass, hollow glass, semi-tempered laminated glass, ultra-thin glass, flat glass or curved glass, etc. It can be understood that the shape, size, etc. of the glass body can also be changed correspondingly according to different application occasions and different appearance requirements.

The technical contents and technical features of the present disclosure have been disclosed above. However, it can be understood that those skilled in the art can make various changes and improvements to the above disclosed concept under the creative idea of the present disclosure, but all fall within the protection scope of the present disclosure. The above description of the embodiments is illustrative rather than limiting, and the scope of protection of the present disclosure is determined by the claims.

## Claims

1. A vehicle window glass assembly, comprising
a glass body (20);
an encapsulation (30) covering periphery of the glass body (20);
wherein the vehicle window glass assembly further comprises a vehicle decoration part (10), wherein the vehicle decoration part (10) is used to be attached to the encapsulation (30) by integral injection molding, the vehicle decoration part (10) comprises a decoration body and a lining film (60) attached to inner surface of the decoration body, the lining film (60) covers a portion of the inner surface such that the covered inner surface does not contact with injection molding material during injection molding process of the decoration part (10); and wherein the thickness of the encapsulation corresponding to a position covered by the lining film (60) on the inner surface of the decoration body is larger than the thickness of the encapsulation corresponding to a position not covered by the lining film (60), and wherein there is no adhesion between the lining film (60) and the injection molding material.

2. A vehicle window glass assembly according to claim 1, wherein the lining film (60) is made of polyvinylidene fluoride or polytetrafluoroethylene.

3. A vehicle window glass assembly according to anyone of claims 1 to 2, wherein the lining film (60) is a single film or a plurality of films (60a, 60b, 60c) spaced along the length direction of the decoration body.

4. A vehicle window glass assembly according to anyone of claims 1 to 2, wherein the lining film (60) is attached to the inner surface of the decoration body by lamination, coating or adhesion.

5. A vehicle window glass assembly according to anyone of claims 1 to 2, wherein the lining film is attached to the inner surface after the decoration body is subjected to a priming process.

6. A vehicle window glass assembly according to anyone of claims 1 to 2, wherein the thickness of the lining film is 0.1 to 4mm.

7. A process for manufacturing a vehicle window glass assembly according to anyone of claims 1 to 6, wherein the process comprises the following steps of:
a. providing a vehicle decoration part (10);
b. placing the vehicle decoration part (10) into a cavity of a mold (40, 50) and enabling outer surface of the decoration body to be adhered to inner wall of the cavity;
c. placing the cut and shaped glass body (20) into the cavity and fixing the glass body (20) in place; and
d. injecting thermoplastic polymer into the cavity to form the encapsulation (30), and enabling the vehicle decoration part (10) and the encapsulation (30) to be integrally molded.

8. The process according to claim 7, further comprises steps of performing a priming process on the inner surface of the decoration body, and then attaching the lining film (60) to a portion of the inner surface prior to the step a.

## Patentansprüche

1. Fahrzeugfensterglasanordnung, umfassend
einen Glaskörper (20);
eine Kapselung (30), die einen Rand des Glaskörpers (20) bedeckt;
wobei die Fahrzeugfensterglasanordnung ferner ein Fahrzeugdekorationsteil (10) umfasst, wobei das Fahrzeugdekorationsteil (10) verwendet wird, um durch ein integrales Spritzgießen an der Kapselung (30) befestigt zu werden, das Fahrzeugdekorationsteil (10) einen Dekorationskörper und eine Auskleidungsfolie (60) umfasst, die an der Innenoberfläche des Dekorationskörpers befestigt ist, wobei die Auskleidungsfolie (60) einen Abschnitt der Innenoberfläche derart bedeckt, dass die bedeckte Innenoberfläche während des Spritzgussprozesses des Dekorationsteils (10) nicht mit dem Spritzgussmaterial in Berührung kommt; und wobei die Dicke der Kapselung, die einer durch die Auskleidungsfolie (60) abgedeckten Position auf der Innenoberfläche des Dekorationskörpers entspricht, größer als die Dicke der Kapselung ist, die einer nicht durch die Auskleidungsfolie (60) abgedeckten Position entspricht, und wobei zwischen der Auskleidungsfolie (60) und dem Spritzgussmaterial keine Haftung besteht.

2. Fahrzeugfensterglasanordnung nach Anspruch 1, wobei die Auskleidungsfolie (60) aus Polyvinylidenfluorid oder Polytetrafluorethylen hergestellt ist.

3. Fahrzeugfensterglasanordnung nach einem der Ansprüche 1 bis 2, wobei die Auskleidungsfolie (60) eine einzelne Folie oder eine Vielzahl von Folien (60a, 60b, 60c) ist, die entlang der Längsrichtung des Dekorationskörpers beabstandet sind.

4. Fahrzeugfensterglasanordnung nach einem der Ansprüche 1 bis 2, wobei die Auskleidungsfolie (60) durch ein Laminieren, ein Beschichten oder ein Haften an der Innenoberfläche des Dekorationskörpers befestigt ist.

5. Fahrzeugfensterglasanordnung nach einem der Ansprüche 1 bis 2, wobei die Auskleidungsfolie an der Innenoberfläche befestigt wird, nachdem der Dekorationskörper einem Grundierungsprozess unterzogen wurde.

6. Fahrzeugfensterglasanordnung nach einem der Ansprüche 1 bis 2, wobei die Dicke der Auskleidungsfolie 0,1 bis 4 mm beträgt.

7. Verfahren zum Fertigen der Fahrzeugfensterglasanordnung nach einem der Ansprüche 1 bis 6, wobei der Prozess die folgenden Schritte umfasst:
a. Bereitstellen eines Fahrzeugdekorationsteils (10);
b. Platzieren des Fahrzeugdekorationsteils (10) in einem Hohlraum einer Form (40, 50) und Ermöglichen, dass die Außenoberfläche des Dekorationskörpers an der Innenwand des Hohlraums haftet;
c. Platzieren des geschnittenen und geformten Glaskörpers (20) in dem Hohlraum und Fixieren des Glaskörpers (20) an seinem Platz; und
d. Einspritzen eines thermoplastischen Polymers in den Hohlraum, um die Kapselung (30) auszubilden, und Ermöglichen, dass das Fahrzeugdekorationsteil (10) und die Kapselung (30) integral geformt werden.

8. Verfahren nach Anspruch 7, das ferner die Schritte eines Durchführens eines Grundierungsprozess auf der Innenoberfläche des Dekorationskörpers und dann das Befestigen der Auskleidungsfolie (60) an einem Abschnitt der Innenoberfläche vor dem Schritt a umfasst.

## Revendications

1. Ensemble vitre de véhicule, comprenant :
un corps en verre (20) ;
une encapsulation (30) recouvrant une périphérie du corps en verre (20) ;
dans lequel l'ensemble vitre de véhicule comprend en outre une pièce décorative de véhicule (10), dans lequel la pièce décorative de véhicule (10) est utilisée pour être attachée à l'encapsulation (30) par moulage par injection intégral, la pièce décorative de véhicule (10) comprend un corps décoratif et un film de revêtement (60) attaché à une surface intérieure du corps décoratif, le film de revêtement (60) recouvre une partie de la surface intérieure de telle sorte que la surface intérieure recouverte n'entre pas en contact avec un matériau de moulage par injection pendant un procédé de moulage par injection de la pièce décorative (10) ; et dans lequel l'épaisseur de l'encapsulation correspondant à une position recouverte par le film de revêtement (60) sur la surface intérieure du corps décoratif est supérieure à l'épaisseur de l'encapsulation correspondant à une position non recouverte par le film de revêtement (60), et dans lequel il n'existe pas d'adhérence entre le film de revêtement (60) et le matériau de moulage par injection.

2. Ensemble vitre de véhicule selon la revendication 1, dans lequel le film de revêtement (60) est en polyfluorure de vinylidène ou en polytétrafluoroéthylène.

3. Ensemble vitre de véhicule selon l'une quelconque des revendications 1 à 2, dans lequel le film de revêtement (60) est un film unique ou une pluralité de films (60a, 60b, 60c) espacés dans le sens de la longueur du corps décoratif.

4. Ensemble vitre de véhicule selon l'une quelconque des revendications 1 à 2, dans lequel le film de revêtement (60) est attaché à la surface intérieure du corps décoratif par laminage, revêtement ou adhésion.

5. Ensemble vitre de véhicule selon l'une quelconque des revendications 1 à 2, dans lequel le film de revêtement est attaché à la surface intérieure après que le corps décoratif a été soumis à un procédé d'apprêt.

6. Ensemble vitre de véhicule selon l'une quelconque des revendications 1 à 2, dans lequel l'épaisseur du film de revêtement est comprise entre 0,1 et 4 mm.

7. Procédé permettant de fabriquer un ensemble vitre de véhicule selon l'une quelconque des revendications 1 à 6, dans lequel le procédé comprend les étapes suivantes consistant à :
a. fournir une pièce décorative de véhicule (10) ;
b. placer la pièce décorative de véhicule (10) dans une cavité d'un moule (40, 50) et permettre à une surface extérieure du corps décoratif d'adhérer à une paroi intérieure de la cavité ;
c. placer le corps en verre coupé et façonné (20) dans la cavité et fixer le corps en verre (20) en place ; et
d. injecter un polymère thermoplastique dans la cavité pour former l'encapsulation (30), et permettre de mouler intégralement la pièce décorative de véhicule (10) et l'encapsulation (30).

8. Procédé selon la revendication 7, comprenant en outre des étapes consistant à réaliser un procédé d'apprêt sur la surface intérieure du corps décoratif, puis à attacher le film de revêtement (60) sur une partie de la surface intérieure avant l'étape a.
